**Europäisches Patentamt**

**European Patent Office**

**Office européen des brevets**

(19)

(11) Veröffentlichungsnummer : **0 062 182**
**B1**

(12) **EUROPÄISCHE PATENTSCHRIFT**

(45) Veröffentlichungstag der Patentschrift :
**07.11.84**

(51) Int. Cl.³ : **B 29 D 27/02**

(21) Anmeldenummer : **82102074.0**

(22) Anmeldetag : **15.03.82**

(54) **Einrichtung zum Herstellen eines Schaumstoff oder Massivstoff bildenden fliessfähigen Reaktionsgemisches aus mindestens zwei fliessfähigen Komponenten.**

(30) Priorität : **26.03.81 DE 3111957**

(43) Veröffentlichungstag der Anmeldung :
**13.10.82 Patentblatt 82/41**

(45) Bekanntmachung des Hinweises auf die Patenterteilung : **07.11.84 Patentblatt 84/45**

(84) Benannte Vertragsstaaten :
**DE**

(56) Entgegenhaltungen :
**CA-A- 866 653**
**DE-A- 2 360 891**
**DE-A- 2 539 477**
**US-A- 3 156 535**
**US-A- 3 181 839**
**US-A- 3 220 801**
**US-A- 3 264 067**
**US-A- 3 754 709**
**US-A- 4 097 020**

(73) Patentinhaber : **MASCHINENFABRIK HENNECKE GMBH**
**Postfach 1180**
**D-5205 St. Augustin 1 (DE)**

(72) Erfinder : **Proksa, Ferdinand, Dr.**
**Am Arenzberg 9**
**D-5090 Leverkusen 31 (DE)**
Erfinder : **Sulzbach, Hans-Michael**
**Hermann-Löns-Strasse 12**
**D-5330 Königswinter 51 (DE)**
Erfinder : **Raffel, Reiner, Dipl.-Ing.**
**Müschbungert 2**
**D-5200 Siegburg (DE)**

(74) Vertreter : **Müller, Heinz-Gerd, Dipl.-Ing. et al**
**BAYER AG Konzernverwaltung RP Patentabteilung**
**D-5090 Leverkusen 1, Bayerwerk (DE)**

**Beschreibung**

Die Erfindung richtet sich auf eine Einrichtung zum Herstellen eines Schaumstoff oder Massivstoff bildenden fließfähigen Reaktionsgemisches aus mindestens zwei fließfähigen Komponenten, bestehend aus

a) Vorratsbehältern für die Komponenten, von denen

b) Zuleitungen über

c) Dosierpumpen zu einem

d) Mischkopf führen, der eine

e) Mischkammer aufweist, in welche mit den Zuleitungen verbundene

f) Einspritzöffnungen einmünden und die einen

g) Ausstoßkolben aufweist, sowie eine

h) Auslaßöffnung besitzt, der ein

i) Auslaufrohr mit einem

j) Mittel zum Verändern des Durchströmquerschnitts nachgeordnet sind ;

k) der Ausstoßkolben in der Reinigungsphase in das Auslaufrohr einschiebbar ist und dieses ausfüllt.

Aus US-A-4 141 740 ist eine Einrichtung der eingangs genannten Art bekannt, bei der das Mittel zum Verändern der Durchströmquerschnitts aus einem Querschieber mit einer Durchströmöffnung besteht, deren Querschnittskontur der Mischkammer bzw. dem nachgeordneten Auslaufrohr entspricht. In dieser Durchströmöffnung wird zunächst eine turbulente Strömung erzeugt, um die Vermischung zu verbessern. Durch entsprechende Stellung des Querschiebers läßt sich der Mischkammerdruck regeln. Diese Einrichtung ist kompliziert aufgebaut und störanfällig, weil sowohl Ausstoßkolben als auch Querschieber enge Passungen aufweisen müssen und insbesondere die Steuerung sehr exakt arbeiten muß, um eine Kollision von Ausstoßkolben und Querschieber zu vermeiden. Eine ausreichend laminare Strömung des Reaktionsgemisches beim Austritt aus dem Auslaufrohr läßt sich nur durch ein verhältnismäßig langes Auslaufrohr sicherstellen.

Die Aufgabe besteht darin, eine einfach aufgebaute Einrichtung der eingangs genannten Art zu schaffen, die sich leicht reinigen läßt und gleichzeitig eine Regelung des Mischkammerdruckes und den Austritt des Reaktionsgemisches aus dem Auslaufrohr in laminarer Strömung ermöglicht, wobei das Auslaufrohr möglichst kurz sein soll.

Dies wird gemäß der Erfindung dadurch erreicht, daß

l) das Auslaufrohr als elastischer Auslaufschlauch ausgebildet ist und

m) das Mittel zum Verändern des Durchströmquerschnitts aus einer Auslenkungsvorrichtung besteht,

n) der Auslaufschlauch nur während der Mischphase mindestens eine reproduzierbare Auslenkung aufweist und

o) während der Reinigungsphase die Kontur der Innenwandung des Auslaufschlauches mit der äußeren Kontur des Ausstoßkolbens übereinstimmt.

Dadurch wird erreicht, daß durch die seitliche Auslenkung des Auslaufschlauches während der Mischphase der Durchströmquerschnitt des Auslaufschlauches entsprechend einstellbar ist, wodurch sich in an sich bekannter Weise der Mischkammerdruck steuern läßt. Noch wesentlicher ist aber, daß durch die Auslenkung des Auslaufschlauches, gegebenenfalls sogar unter Beibehaltung des Durchströmquerschnittes, der Strömungsweg derart geformt werden kann, daß sich die Strömung bereits im Auslaufrohr zu einem hohen Grade beruhigt. Dies ist insbesondere beim Einbringen des Reaktionsgemisches in Formwerkzeuge wichtig, um das schädliche Einschlagen von Luft zu vermeiden und eine geschlossene, sich möglichst gleichmäßig ausdehende Fließfront zu erzielen. Der weitere wesentliche Vorteil liegt darin, daß mit dem Ausstoßkolben wie bei Ausstoßkolbenmischköpfen mit starrem Auslaßrohr der Auslaufschlauch von Gemischresten gereinigt werden kann.

Einrichtungen mit elastischen Auslaufschläuchen sind an sich aus DE-A-2 539 477 und US-A-3 264 067 bekannt. Der Auslaufschlauch dient bei diesen Einrichtungen jedoch nur als Absperrorgan.

Nach einer ersten Ausführungsform ist der Auslaufschlauch in der verlängerten Achse der Mischkammer angeordnet und der Ausstoßkolben füllt während der Reinigungsphase auch die Mischkammer aus.

Diese Anordnung entspricht im wesentlichen derjenigen gemäß US-A-1 141 470, jedoch mit dem Unterschied, daß bei der vorbekannten Einrichtung ein starres Auslaufrohr vorhanden ist und zwischen Mischkammerauslaß und Auslaufrohr ein mit einer Durchströmöffnung versehener Querschieber angeordnet ist.

Nach einer anderen Ausführungsform schließt der Auslaufschlauch unter einem Winkel zur Mischkammer an deren Auslaßöffnung an, wobei der Mischkammer ein eigener Ausstoßkolben zugeordnet ist.

Auch diese Ausführungsform ist an sich mit starrem Auslaufrohr aus der US-A-3 975 128 bekannt.

Durch die Verwendung eines elastischen und verformbaren Auslaufschlauches anstelle des starren Auslaufrohres sind die oben erwähnten, mit der neuen Gestaltung erzielbaren Vorteile auch bei diesen beiden an sich bekannten Einrichtungstypen erreichbar.

O 062 182

Die Auslenkungsvorrichtung wirkt durch Druck oder Zug von außen auf den Auslaufschlauch ein und hält ihn in der Mischphase in der gewünschten Position. Nach einer ersten geeigneten und vorteilhaften Ausführungsform steht die Auslenkungsvorrichtung dauernd im Eingriff und wird mit Beginn des Reinigungstaktes durch die Vorschubkraft des Ausstoßkolbens zurückgedrängt.

Nach einer weiteren geeigneten Ausführungsform ist die Auslenkvorrichtung an die Steuervorrichtung der Einrichtung angeschlossen und wird in Abhängigkeit von der Bewegung des Ausstoßkolbens mittels Kontaktschaltern, gegebenenfalls unter Zuhilfenahme von Zeitverzögerungsrelais, gesteuert. Diese Steuerung selbst ist nicht Gegenstand der Erfindung. Ihre Ausgestaltung liegt durch das vorgegebene Programm für den Fachmann klar auf der Hand. Vor Beginn der Mischphase muß die Auslenkungsvorrichtung in Arbeitsstellung gebracht werden, so daß sie gegen den Auslaufschlauch drückt bzw. ihn durch Zug auslenkt ; mit Beginn der Reinigungsphase soll durch einen weiteren Kontaktschalter die Rückbewegung der Auslenkungsvorrichtung ausgelöst werden, so daß die Auslenkungsvorrichtung bereits außer Eingriff ist, wenn der Ausstoßkolben in den Auslaufschlauch eindringt.

Vorzugsweise besteht die Auslenkungsvorrichtung aus einem quer verschiebbaren Stößel. Möglich sind hierfür Antriebe auf mechanischer Basis, z. B. durch Federkraft, auf hydraulischer, pneumatischer oder elektromagnetischer Basis. Die mit dem Schlauch in Kontakt kommende Fläche des Stößels ist entsprechend der gewünschten Verformung bzw. Auslenkung des Auslaufschlauches geformt. In vorteilhafter Weise ist der Stößel mit einem austauschbaren Kopf versehen, so daß Köpfe mit verschiedenen Anlegeflächen, die den jeweiligen Erfordernissen entsprechend geformt sind, verwendet werden können. Der Kopf kann auch eine profilierte Rolle tragen. In vorteilhafter Weise ist die Hubweite des Stößels einstellbar, um das Maß der Auslenkung beeinflussen zu können.

Nach einer weiteren Ausführungsform besteht die Auslenkungsvorrichtung aus einer Schwinge. Im Prinzip lassen sich auch hier alle für den Stößel beschriebenen Ausführungsformen anwenden, denn der Unterschied besteht im wesentlichen nur darin, daß die lineare Bewegung des Stößels durch die Schwenkbewegung der Schwinge ersetzt ist. Besonders günstig ist die Ausführung als Doppelschwinge, deren Drehachse quer durch die Mittelachse des Auslaufschlauches in der Reinigungsphase verläuft und die an jedem Ende einen Kopf mit Anlagefläche bzw. Rolle trägt. Befindet sich die Doppelschwinge im Eingriff, wird eine S-förmige Auslenkung des Auslaufschlauches erreicht.

Eine weitere Ausführungsform der Einrichtung ist dadurch gekennzeichnet, daß die Auslenkungsvorrichtung aus einer den Auslaufschlauch nur teilweise umgebenden, abgestützten Druckkammer mit Druckmittelanschlußstutzen besteht.

Nach einer weiteren Ausführungsform weist der Auslaufschlauch in der Mischphase seine Originalform auf.

Bei dieser Ausführungsform ist der Auslaufschlauch so vorgeformt, daß er im Normalzustand spannungsfrei ist. Dies heißt, daß beispielsweise in einem Auslaufschlauch mit einer gewissen Grundsteifigkeit ein Bogen eingeformt ist, der der gewünschten Form des Auslaufschlauches in der Mischphase entspricht. Hier findet dann eine Begradigung des Auslaufschlauches aus der Normalform mittels des Ausstoßkolbens während der Reinigungsphase statt. Die erforderliche Grundsteifigkeit läßt sich dabei durch variierende Wanddicke, äußerlich angeformte Rippen usw. erreichen.

Nach einer weiteren Ausführungsform weist der Auslaufschlauch mindestens einen Zwischenabschnitt höherer radialer Dehnfähigkeit auf. Diese hohe Dehnfähigkeit kann sich auf einen Sektor erstrecken, sie kann sich aber auch über den gesamten Umfang verteilen.

Die Dehnfähigkeit sollte dabei so bemessen oder durch Abstützungen begrenzbar sein, daß während der Mischphase sich eine gewünschte Ausbauchung unter dem Druck des ausströmenden Gemisches bildet, die jedoch nach Beendigung des Mischvorganges durch die Eigenelastizität dieses Abschnittes soweit zurückgeformt wird, daß dieser Wandungsteil des Schlauches in der Reinigungsphase am Ausstoßkolben anliegen wird, so daß beim Vorschub des Ausstoßkolbens auch für diesen Wandungsteil das Abstreifen von Gemischresten sichergestellt ist. Es versteht sich, daß diese Ausbauchung auch durch eine der Auslenkungsvorrichtung ähnlichen Vorrichtung steuerbar ist, die einseitig oder allseitig auf den Zwischenabschnitt Zug ausübt. Für eine einseitige Ausbauchung wird eine Zugvorrichtung empfohlen, für eine allseitige radiale Ausbauchung eine den Zwischenabschnitt umgebende Vakuumkammer.

Als Materialien für den Auslaufschlauch eignen sich insbesondere Kautschuk und Polyurethanelastomere geeigneter Dehnfähigkeit. Das Material muß genügende Festigkeit gegen die auftretenden Wechselbeanspruchungen besitzen und die innere Schlauchwandung muß möglichst glatt sein, um das Anhaften eines Filmes aus Reaktionsgemisch zu vermeiden. Gegebenenfalls läßt sich die Innenwandung mit Materialien beschichten, die antiadhesive Wirkung, gute Gleiteigenschaften und hohe Verschleißfestigkeit aufweisen. Geeignet hierfür sind Silikonbeschichtungen und Auskleidungen aus Polytetrafluorethylen. Anstelle der Beschichtung kann auch ein Innenliner aus entsprechendem Material treten.

Der Auslaufschlauch ist sinnvollerweise in einem Gehäuse angeordnet, das so gestaltet ist, daß er sich im Bedarfsfalle leicht austauschen läßt.

Das Maß der Auslenkung und die Verformung während der Mischphase hängen von vielen Faktoren ab, wie beispielsweise Durchsatz, Mischkammerdruck, Viskosität des Reaktionsgemisches, Größe des Durchströmquerschnittes und Länge des Auslaufschlauches. Wegen dieser vielen Einflußfaktoren ist es sinnvoll, die optimalen Formen empirisch zu ermitteln.

3

In der Zeichnung ist die neue Einrichtung in mehreren Ausführungsbeispielen rein schematisch dargestellt und nachstehend näher erläutert. Es zeigen :

Figur 1 eine erste Ausführungsform der Einrichtung mit einem Ausstoßkolbenmischkopf und in der Verlängerung der Mischkammerachse angeordnetem Auslaufschlauch nach Schnitt A-A in Fig. 2 während der Mischphase ;

Figur 2 die gleiche Ausführungsform gemäß Schnitt B-B in Fig. 1 während der Mischphase ;

Figur 3 die gleiche Ausführungsform nach Schnitt C-C in Fig. 4, jedoch während der Reinigungsphase ;

Figur 4 die gleiche Ausführungsform gemäß Schnitt D-D in Fig. 3 während der Reinigungsphase ;

Figur 5 eine zweite Ausführungsform der Einrichtung mit einem Ausstoßkolbenmischkopf und einem rechtwinklig zur Achse der Mischkammer angeordneten Auslaufschlauch nach Schnitt E-E in Fig. 6 während der Mischphase ;

Figur 6 die gleiche Ausführungsform gemäß Schnitt F-F in Fig. 5 während der Mischphase ;

Figur 7 die gleiche Ausführungsform nach Schnitt G-G in Fig. 8, jedoch während der Reinigungsphase ;

Figur 8 die gleiche Ausführungsform gemäß Schnitt H-H in Fig. 7 während der Reinigungsphase ;

Figur 9 den Auslaufteil einer dritten Ausführungsform der Einrichtung nach Schnitt I-I in Fig. 10 während der Mischphase ;

Figur 10 dem gleichen Auslaufteil gemäß Schnitt J-J in Fig. 9 während der Mischphase ;

Figur 11 den gleichen Auslaufteil nach Schnitt K-K in Fig. 12 während der Reinigungsphase ;

Figur 12 den gleichen Auslaufteil nach Schnitt L-L in Fig. 11 während der Reinigungsphase ;

Figur 13 eine hydraulisch und mit Zug arbeitende Auslenkungsvorrichtung im Längsschnitt ;

Figur 14 eine elektromagnetisch arbeitende Auslenkungsvorrichtung mit Rückstellfeder im Längsschnitt ;

Figur 15 eine besondere Ausführungsform der Köpfe einer Auslenkungsvorrichtung nach Schnitt M-M in Fig. 16 während der Mischphase ;

Figur 16 die gleiche Ausführungsform nach Schnitt N-N in Fig. 15 während der Mischphase ;

Figur 17-20 zwei weitere Ausführungsformen der Einrichtung während der Mischphase (Fig. 17, 19) und während der Reinigungsphase (Fig. 18, 20) ;

Figur 21, 22 besondere Ausführungsformen des Auslaufschlauches.

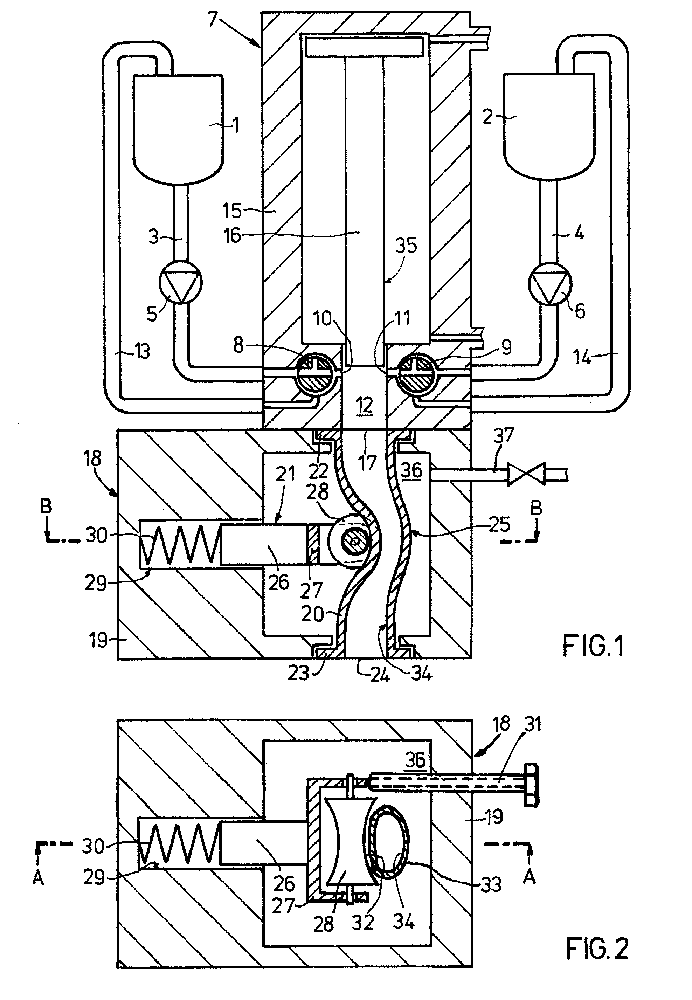

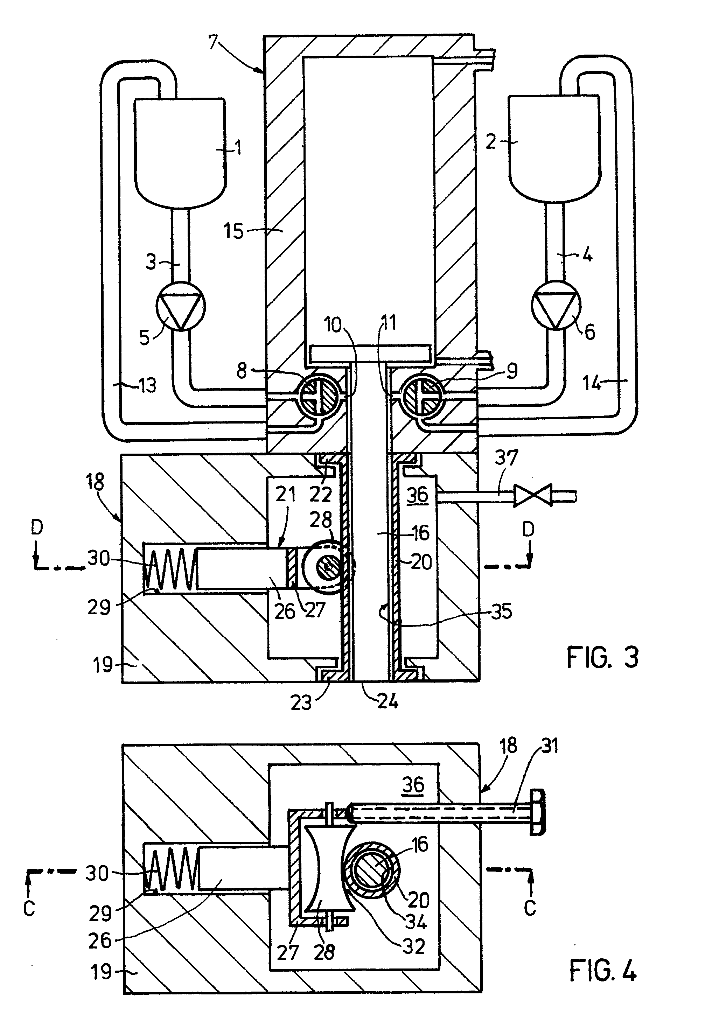

Bei der Ausführungsform gemäß Fig. 1 bis 4 führen von Vorratsbehältern 1, 2 Zuleitungen 3, 4 über Dosierpumpen 5, 6 zu einem Mischkopf 7. Über Umschaltventile 8, 9 strömen die Komponenten durch Einlaßöffnungen 10, 11 während der Mischphase (Fig. 1) in die Mischkammer 12 eines Mischkopfes 7. In der Reinigungsphase (Fig. 3) hingegen werden sie mittels der Umschaltventile 8, 9 in Rücklaufleitungen 13, 14 geführt. Im Gehäuse 15 des Mischkopfes 7 ist ein hydraulisch angetriebener Ausstoßkolben 16 geführt, der in der Mischphase die Einlaßöffnungen 10, 11 freigibt (Fig. 1). An die Auslaßöffnung (Fig. 1) der Mischkammer 12 schließt ein Auslaufteil 18 an. Dieses besteht aus einem Gehäuse 19, einem elastischen Auslaufschlauch 20 und einer Auslenkungsvorrichtung 21. Der Auslaufschlauch ist mit seinen Flanschen 22, 23 im Gehäuse 19 fest, aber leicht austauschbar, eingespannt. Seine Auslauföffnung 24 mündet in ein Formwerkzeug (nicht dargestellt). Er besteht aus einem abriebfesten, geschmeidigen, hohen Wechselbeanspruchungen unterwerfbaren Polyurethanelastomer und ist innenseitig mit einer Silikonschicht überzogen. In Fig. 1, 2 weist der Auslaufschlauch 20 eine mittels der Auslenkvorrichtung 21 bewirkte Auslenkung 25 gegenüber seiner gestreckten Form in der Reinigungsphase (Fig. 3, 4) auf. Die Auslenkungsvorrichtung 21 besteht im wesentlichen aus einem Stößel 26, dessen austauschbarer Kopf 27 eine konturierte Rolle 28 trägt. Der Stößel 26 ist in einer Bohrung 29 des Gehäuses 19 geführt. Er stützt sich auf einer in der Bohrung 29 angeordneten Druckfeder 30 ab, die ihn gegen den Auslaufschlauch 20 drückt. Der Hub des Stößels 26 ist mittels des Anschlages 31 (Fig. 2, 4) von Hand derart einstellbar, daß der Auslaufschlauch 20 die gewünschte Auslenkung erfährt. Die konkave Kontur 32 (Fig. 2, 4) der Rolle 28 bewirkt dabei gleichzeitig eine gewünschte Verformung 33 (Fig. 2) des Auslaufschlauches 20, so daß der Strömungsweg des Gemisches nicht nur gekrümmt, sondern auch der Strömungsquerschnitt eingeschnürt ist. Nach Beendigung des Mischvorganges nimmt der Ausstoßkolben 16 die Position gemäß Fig. 3 ein. Beim Eindringen in den Hohlraum des Auslaufschlauches 20 wird der Stößel 26 durch die die Kraft der Druckfeder 30 über wiegende Vorschubkraft des Ausstoßkolbens 16 zurückgedrängt, wobei auch während dieser Phase die Rolle 28 außen am Auslaufschlauch 20 anliegen bleibt (Fig. 3, 4). Die Innenwandung 34 des Auslaufschlauches 20 nimmt in dieser Stellung des Ausstoßkolbens 16 dessen Umfangskontur 35 an. Zusätzlich ist die vom Gehäuse 19 umschlossene Kammer als Druckkammer 36 ausgebildet, der ein Druckmittelzufuhrstutzen 37 zugeordnet ist. Die Druckkammer 36 ist während der Mischphase zum Zwecke der äußeren Abstützung des Auslaufschlauches 20 mit Druckluft beaufschlagt. Der in der Druckkammer 36 herrschende Druck entspricht im wesentlichen demjenigen des durch den Auslaufschlauch 20 strömenden Reaktionsgemisches, so daß ein Gleichgewicht hergestellt ist.

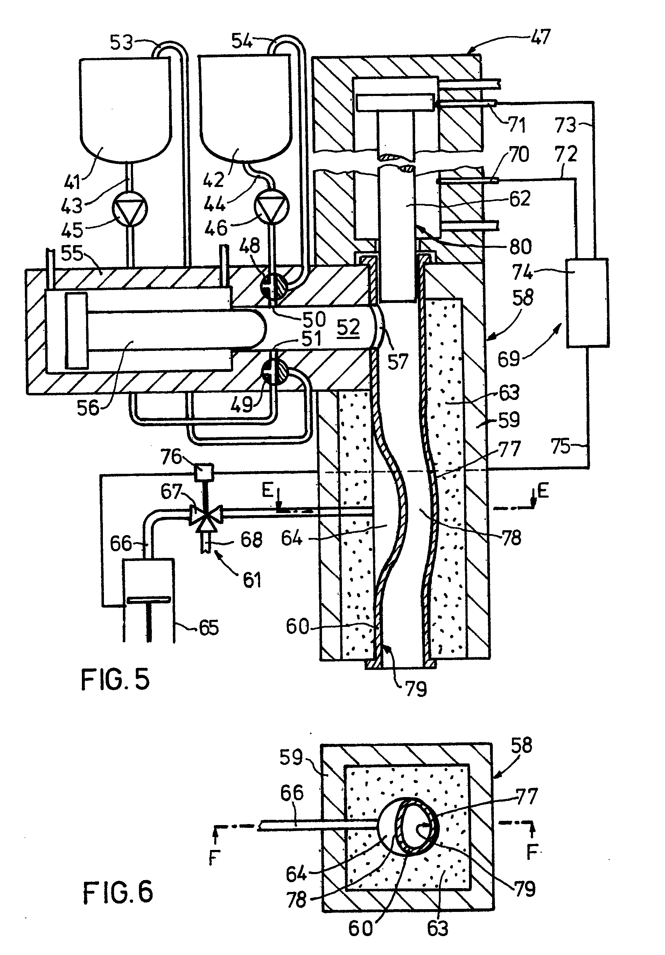

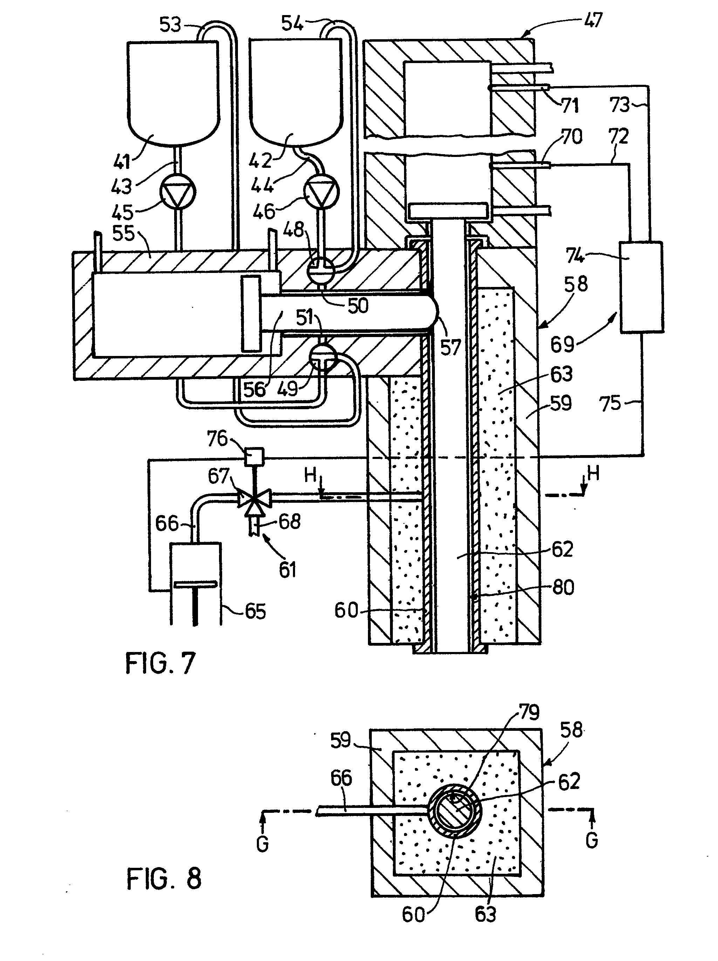

Bei der Ausführungsform der Einrichtung gemäß Fig. 5 bis 8 führen von Vorratsbehältern 41, 42 Zuleitungen 43, 44 über Dosierpumpen 45, 46 zu einem Mischkopf 47. Über Umschaltventile 48, 49 strömen die Komponenten durch Einlaßöffnungen 50, 51 während der Mischphase (Fig. 1) in die Mischkammer 52 eines Mischkopfes 47. In der Reinigungsphase (Fig. 3) hingegen werden sie mittels der Umschaltventile 48, 49 in die Rücklaufleitungen 53, 54 geführt. Im Gehäuse 55 des Mischkopfes 47 ist ein hydraulisch angetriebener Ausstoßkolben 56 geführt, der in der Mischphase die Einlaßöffnungen 50, 51 freigibt (Fig. 1). Die Auslaßöffnung der Mischkammer 52 ist mit 57 bezeichnet. Zum Gehäuse 55 des Mischkopfes 47 ist unter einem rechten Winkel ein Auslaufteil 58 angeordnet. Es besteht aus einem Gehäuse 59, einem Auslaufschlauch 60 ; einer Auslenkungsvorrichtung 61 sowie einem im Gehäuse 59 geführten, weiteren hydraulisch antreibbaren Ausstoßkolben 62. Der Auslaufschlauch 60 besteht aus Kautschuk. Er ist mit einem Innenliner aus Polytetrafluorethylen versehen (nicht dargestellt) und ist außenseitig durch eine Packung 63 aus halbweichem Schaumstoff abgestützt und damit verklebt. An einer Stelle befindet sich jedoch keine Verklebung. Hier ist eine pneumatische Druckkammer 64 vorgesehen, die zusammen mit dem Kompressor 65, der Zuleitung 66, dem Absperr- und Entlüftungsventil 67 sowie dem Entlüftungsstutzen 68 die Auslenkvorrichtung darstellt. Das Ventil 67 ist mittels einer rein schematisch angedeuteten Steuerung 69 stellbar.

Sie besteht aus Kontaktschaltern 70, 71, von denen Zuleitungen 72, 73 zu einem Steuerrelais 74 führen, das über eine Impulsleitung 75 mit einem Servomotor 76 zum Bedienen des Ventils 67 und des Kompressors 65 verbunden ist. Es versteht sich, daß die Umschaltventile 48, 49 und die Ausstoßkolben 56, 62 in ihrer Arbeitsweise über eine nicht dargestellte Steuerung aufeinander abgestimmt sind.

Die Arbeitsweise ist folgende :

In Fig. 5, 6 ist die Mischphasenstellung dargestellt. Der Auslaufkolben 56 ist zurückgefahren und die Umschaltventile 48, 49 stehen auf « Mischen », so daß die Komponenten aus den Vorratsbehältern 41, 42 mittels der Dosierpumpen 45, 46 in die Mischkammer 52 gefördert und dort durch Injektion vermischt werden. Beim Austritt aus der Auslaßöffnung 57 gelangt das Reaktionsgemisch unter rechtwinkliger Umlenkung in den Auslaufschlauch 60, da der Ausstoßkolben 62 soweit zurückgefahren ist, daß die Auslaßöffnung 57 freigegeben ist. Die Auslenkungsvorrichtung 61 befindet sich bereits in Arbeitsstellung, da der Ausstoßkolben 62 beim Zurückfahren den Kontaktschalter 71 ausgelöst hat, der über das Steuerrelais 74 dem Servomotor 76 den Befehl gab, den Kompressor 65 einzuschalten und das Ventil 67 für die Beschickung der Druckkammer 64 einzustellen. Ist in der Druckkammer 64 ein gewünschter Druck erreicht, so schließt das Ventil 67 und der Kompressor schaltet sich automatisch ab. Dabei erfährt der Auslaufschlauch 60 im Bereich der Druckkammer 64 eine Auslenkung 77 mit gleichzeitiger Verformung 78, wodurch der Gemischstrom einen gekrümmten Weg nehmen muß und einen Einschnürung erfährt. Die Strömungsgeschwindigkeit im Auslaufschlauch 60 beträgt im engsten Querschnitt ca. 10 bis 60 m/sec und am Austritt ca. 0,5 bis 10 m/sec. Zur Beendigung des Mischvorganges schalten die Umschaltventile 48, 49 um und verbinden die Zuleitungen 43, 44 mit den Rücklaufleitungen 53, 54. Der Ausstoßkolben 56 entleert die Mischkammer 52 und füllt sie aus. Nun schiebt der Ausstoßkolben 62 den Auslaufschlauch 60 leer, wobei er über die Kontaktschalter 70 im Steuergerät 74 einen Impuls auslöst, der dem Servomotor 76 den Befehl gibt, auf « Entlüftung » umzuschalten. Der vorschiebende Ausstoßkolben 62 verdrängt die restliche Luft aus der Druckkammer 64 und entleert den Auslaufschlauch 60 restlos. Die Elastizität der Packung 63 ist so abgestimmt, daß der freie Querschnitt des Auslaufschlauches 60 in der Reinigungsphase geringfügig geringer wäre als der Querschnitt des Ausstoßkolbens 62 beträgt. Durch die auftretende Spannung nimmt die Innenwandung 79 des Auslaufschlauches 60 die Umfangskontur 80 des Ausstoßkolbens 62 an, wodurch ein sauberes Abstreifen der Innenwandung 79 sichergestellt ist. Der nächste Mischvorgang wird durch Zurückfahren des Ausstoßkolbens 62 eingeleitet. Beim Passieren des Kontaktschalters 70 der Steuerung 69 wird die Druckkammer 64 unter entsprechender Umschaltung des Ventils 67 erneut beaufschlagt und nach Zurückfahren des Ausstoßkolbens 56 und Umschalten der Umschaltventile 48, 49 auf « Mischen » erfolgt der nächste Mischvorgang.

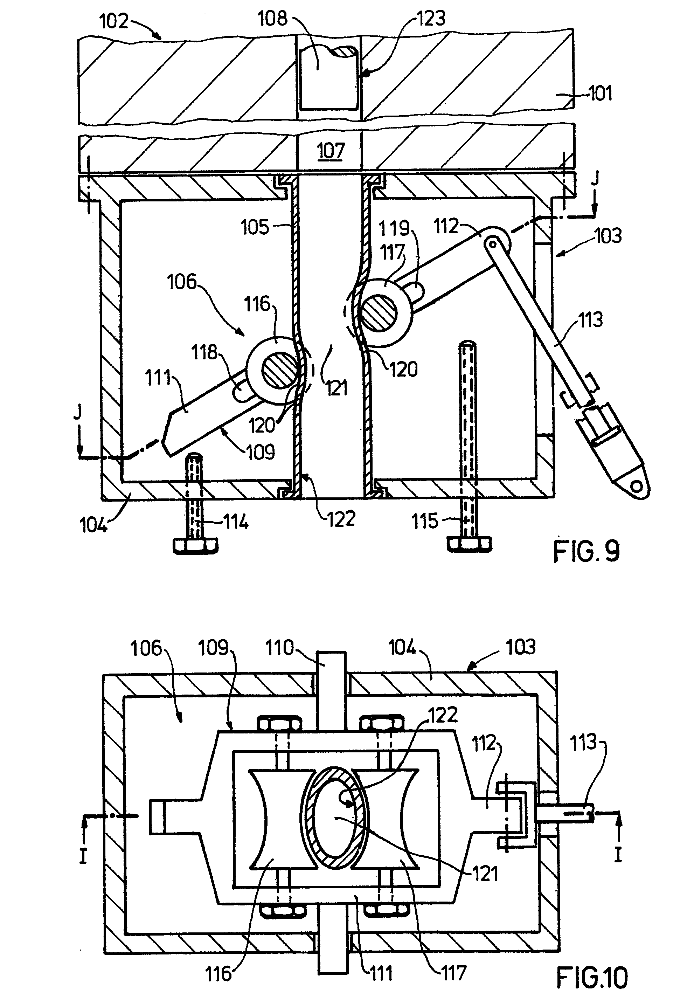

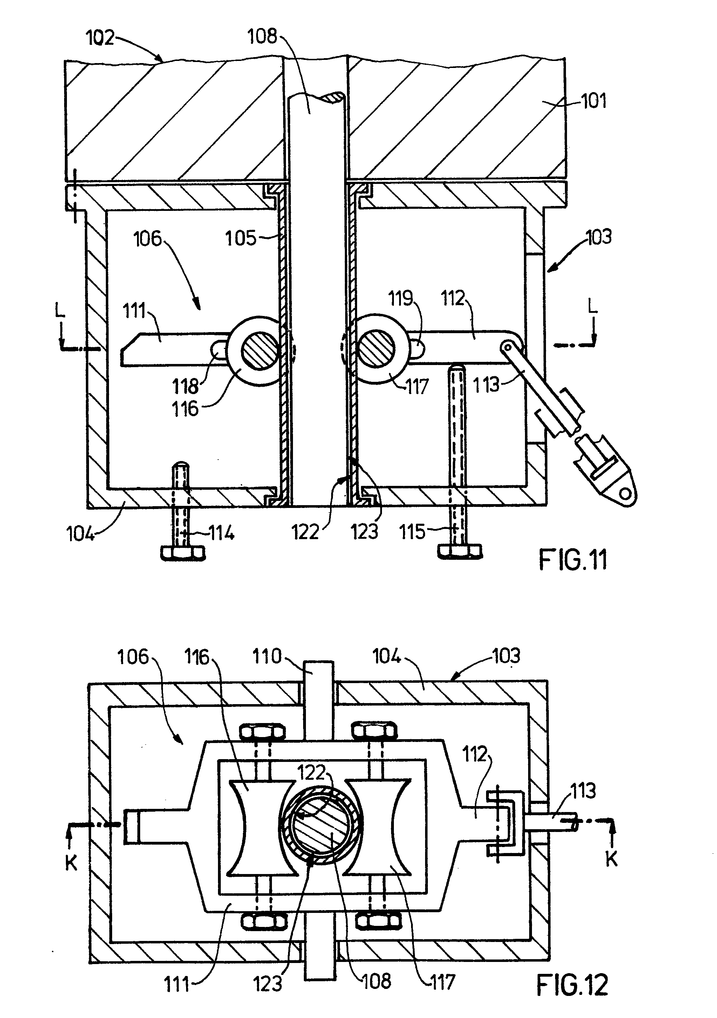

Bei der Ausführungsform gemäß Fig. 9 bis 12 ist an das angedeutete Ende 101 des Mischkopfes 102 ein Auslaufteil 103 angeflanscht, das aus einem Gehäuse 104 besteht, in dem ein elastischer Auslaufschlauch 105 mit einer Auslenkungsvorrichtung 106 angeordnet ist Der Auslaufschlauch 105 ist in der Verlängerung der Mischkammer 107 angeordnet, so daß für beide ein gemeinsamer Ausstoßkolben 108 vorgesehen ist. Die Auslenkungsvorrichtung 106 besteht aus einer Doppelschwinge 109, deren Drehachse 110 senkrecht zur Mittellinie des Auslaufschlauches 105 verläuft. Die Drehachse 110 ist im Gehäuse 104 gelagert (Fig. 10, 12) und trägt eine rahmenartige Wippe 111, durch die der Auslaufschlauch 105 hindurchführt. Eines ihrer Enden 112 ist gelenkig mit einer hydraulisch betätigbaren Kolbenstange 113 verbunden. Von Hand einstellbare Anschläge 114, 115 begrenzen den Schwenkwinkel der Wippe 111. In der Wippe 111 sind beidseitig des Auslaufschlauches 105 konturierte Rollen 116, 117 in Langlöchern 118, 119 justierbar und austauschbar gelagert. Je nach dem Abstand der Rollen 116, 117 voneinander läßt sich eine kleinere oder größere Auslenkung 120 unabhängig vom Schwenkwinkel erzielen. Ihr Abstand von der Drehachse 110 läßt sich sowohl symmetrisch als auch asymmetrisch einstellen, je nach Art der gewünschten Auslenkung 120 bzw. Verformung 121. In Fig. 11, 12 nimmt die Innenwandung 122 des Auslaufschlauches 105 die Umfangskontur 123 des Ausstoßkolbens 108 an.

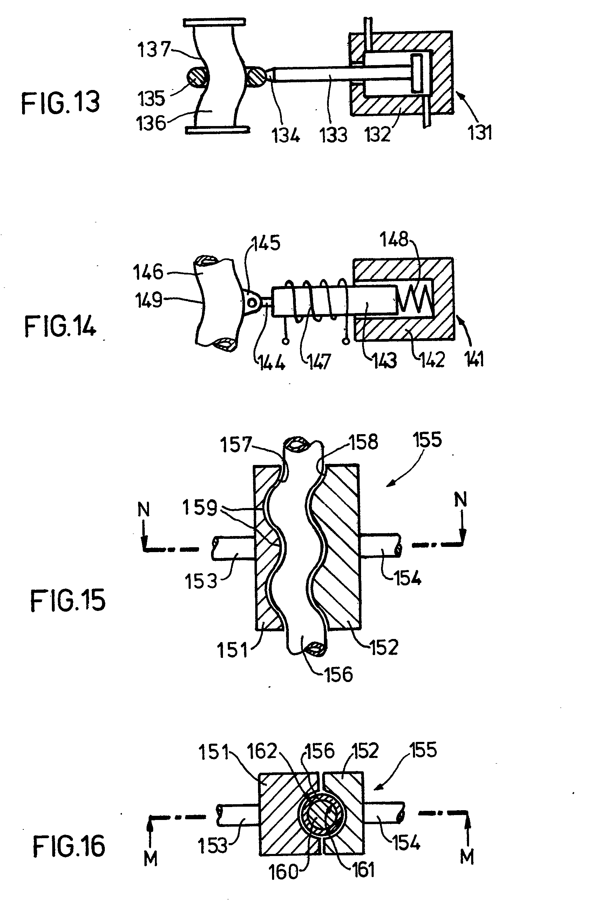

Gemäß Fig. 13 besteht die Auslenkungsvorrichtung 131 aus einem in einem Hydraulikgehäuse 132 geführten Zugstößel 133, an dessen Kopf 134 ein Ring 135 angeordnet ist, der den Auslaufschlauch 136 umgibt und mit ihm fest verbunden ist. Die Auslenkung ist mit 137 bezeichnet.

Gemäß Fig. 14 besteht eine elektromagnetisch arbeitende Auslenkungsvorrichtung 141 aus einem in einem Gehäuse 142 geführten Zugstößel 143, dessen Kopf 144 an einer Lasche 145 des Auslaufschlauches 146 befestigt ist. Der Zugstößel 143 ist von einer Induktionsspule 147 umgeben und arbeitet gegen eine im Gehäuse 142 gelagerte Rückstellfeder 148. Die Auslenkung ist mit 149 bezeichnet.

5

Gemäß Fig. 15, 16 sind die Köpfe 151, 152 zweier gegeneinander verschiebbarer Stößel 153, 154 einer Auslenkungsvorrichtung 155 gezeigt. Diese Köpfe 151, 152 umfassen den Auslaufschlauch 155 halbkreisförmig und besitzen im Längsschnitt (Fig. 15) rillenartige Konturen 157, 158, denen sich der Auslaufschlauch 156 anpaßt. Hier sind also mehrere Auslenkungen 159 vorhanden, ohne daß eine Verformung des Auslaufschlauches 156 im Sinne einer Veränderung des Durchströmquerschnittes vorhanden wäre. Bei Beginn der Reinigungsphase sind die Zugstößel 153, 154 so weit zurückfahrbar, daß der Auslaufschlauch 156 beim Eindringen des Ausstoßkolbens 160 mit den Köpfen 151, 152 bzw. deren Konturfläche 157, 158 keine Berührung mehr hat. Die Innenwandung 161 des Auslaufschlauches 156 nimmt die Umfangskontur 162 Ausstoßkolbens 160 an.

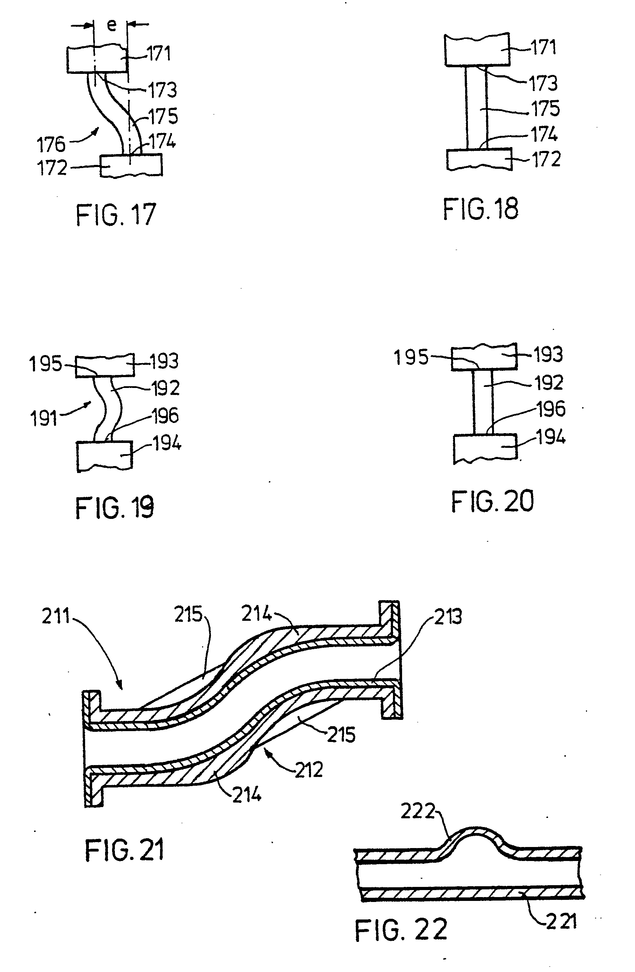

In Fig. 17, 18 ist der Mischkopf 171 selbst als Auslenkungsvorrichtung gestaltet und gegenüber dem Formwerkzeug 172 um die Strecke e querverschiebbar, die den parallelen Abstand der Auslaßöffnung 173 der Mischkammer und der Auslaßöffnung 174 des Auslaufschlauches 175 während der Mischphase charakterisiert. Die Auslenkung 176 wird dabei durch Dehnung des Auslaufschlauches 175 verursacht. Alternativ könnte auch die Form des Auslaufschlauches 175 gemäß Fig. 17 die ursprüngliche Form sein, wobei diese vorgegebene Auslenkung 176 durch Querverschiebung um die Strecke e des Mischkopfes 171 und/oder der Formwerkzeuges 172 durch damit verbundene Stauchung des Auslaufschlauches 175 während der Reinigungsphase beseitigt wird. Für die beiden Alternativen sind für den Auslaufschlauch 175 jedoch unterschiedliche Materialien geeigneter Dehn- oder Stauchfähigkeit auszuwählen, um den unterschiedlichen Beanspruchungsarten gerecht zu werden.

Die Ausführungsform gemäß Fig. 19, 20 entspricht im wesentlichen derjenigen gemäß Fig. 17, 18, jedoch mit dem Unterschied, daß die Auslenkung 191 des Auslaufschlauches 192 nicht durch Querverschiebbarkeit von Mischkopf 193 und/oder Formwerkzeug 194 erfolgt, sondern durch senkrechte Verschiebung um die Strecke e gegeneinander, so daß während der Mischphase gegenüber der Reinigungsphase die Auslaßöffnung 195 der Mischkammer und die Auslaßöffnung 196 des Auslaufschlauches 192 unterschiedliche Positionen zueinander einnehmen.

In Fig. 21 weist der Auslaufschlauch 201 Normalform auf. Das heißt, er ist so vorgeformt, daß die gewünschte Auslenkung 202 bereits eingearbeitet ist.

Er ist mit einem Innenliner 203 versehen und zeigt in seiner Wandung Verdickungen 204. Rippen 205 erzeugen eine weitere gewisse Versteifung an bestimmten Stellen, die eine ausreichende Formstabilität beim Durchströmen des Reaktionsgemisches, aber andererseits eine ausreichende Nachgiebigkeit des Auslaufschlauches 201 beim Einfahren des Ausstoßkolbens gewährleistet.

In Fig. 21 weist der Auslaufschlauch 221 einen Zwischenabschnitt 222 mit einem Segment höherer Dehnfähigkeit als der restliche Teil auf.

## Beispiel

Verwendet wird die Vorrichtung in der Ausführungsform gemäß Fig. 1 bis 4.

Die Mischkammer 12 sowie der Auslaufschlauch 20 haben einen Durchmesser von 18 mm bzw. einen freien Durchströmquerschnitt von ca. 250 mm$^2$. Vor Beginn der Mischphase wird der Auslaufschlauch 20 mittels der Auslenkvorrichtung 21 um 18 mm seitlich ausgelenkt. Dabei findet gleichzeitig eine Verformung statt, die den freien Durchströmquerschnitt an dieser Stelle auf ca. 25 mm$^2$ einengt. Zur Stabilisierung des Auslaufschlauches 20 wird in der Druckkammer 36 ein Druck von 1,5 bar eingestellt. Von den Dosierpumpen 5,6 werden je 250 cm$^3$/sec Polyol bzw. Isocyanat aus den Vorratsbehältern 1,2 in die Mischkammer 12 gefördert. Dort stellt sich ein Staudruck von ca. 5 bar ein. Es entsteht ein Reaktionsgemisch mit einer Viskosität von 800 mPa s. Der Gemischdurchsatz beträgt 500 cm$^3$/sec bei einer Austrittsgeschwindigkeit von 2 m/sec in der Austrittsöffnung 24 des Auslaufschlauches 20. Der Austritt des Reaktionsgemisches erfolgt in beruhigter, laminarer Strömung.

Mit Ablauf des eingestellten Mischzeitintervalls schalten die Wegeventile 8,9 auf Kreislauf und der Ausstoßkolben 16 entleert die Mischkammer 12 sowie den Auslaufschlauch 20. Dabei wird der Stößel 26 durch die Vorschubkraft des Ausstoßkolbens 16 zurückgestellt, so daß die innere Wandung 34 des Auslaufschlauches 20 die Umfangskontur 35 des Ausstoßkolbens 16 annimmt. Fährt der Ausstoßkolben 16 wieder in die Mischstellung zurück, so wird der Auslaufschlauch 20 aufgrund der auf den Stößel 26 wirkenden Kraft der Feder 30 wieder selbsttätig eingestellt.

## Ansprüche

1. Einrichtung zum Herstellen eines Schaumstoff oder Massivstoff bildenden fließfähigen Reaktionsgemisches aus mindestens zwei fließfähigen Komponenten, bestehend aus :
   a) Vorratsbehältern (1, 2 ; 41, 42) für die Komponenten, von denen
   b) Zuleitungen (3, 4 ; 43, 44) über
   c) Dosierpumpen (5, 6 ; 45, 46) zu einem
   d) Mischkopf (7 ; 47 ; 102 ; 171 ; 193) führen, der eine
   e) Mischkammer (12 ; 52 ; 107) aufweist, in welche mit den Zuleitungen (3, 4 ; 43, 44) verbundene
   f) Einspritzöffnungen (10, 11 ; 50, 51) einmünden und die einen
   g) Ausstoßkolben (16 ; 62 ; 108 ; 160) aufweist, sowie eine

h) Auslaßöffnung (17 ; 57 ; 173) besitzt, der ein

i) Auslaufrohr (20 ; 60 ; 105 ; 136 ; 146 ; 156 ; 175 ; 192 ; 211 ; 221) mit einem

j) Mittel (21 ; 61 ; 106 ; 131 ; 141 ; 155 ; 171 ; 193 ; 194) zum Verändern des Durchströmquerschnitts nachgeordnet sind, wobei

k) der Ausstoßkolben (16 ; 62 ; 108 ; 160) in der Reinigungsphase in das Auslaufrohr (20 ; 60 ; 105 ; 136 ; 146 ; 156 ; 175 ; 192 ; 211 ; 221) einschiebbar ist und diesen ausfüllt, dadurch gekennzeichnet, daß

l) das Auslaufrohr (20 ; 60 ; 105 ; 136 ; 146 ; 156 ; 175 ; 192 ; 211 ; 221) als elastischer Auslaufschlauch ausgebildet ist ; und

m) das Mittel (21 ; 61 ; 106 ; 131 ; 141 ; 155 ; 171 ; 193 ; 194) zum Verändern des Durchströmquerschnittes aus einer Auslenkungsvorrichtung besteht ;

n) der Auslaufschlauch (20 ; 60 ; 105 ; 136 ; 146 ; 156 ; 175 ; 192 ; 211 ; 221) nur während der Mischphase mindestens eine reproduzierbare Auslenkung (25 ; 61 ; 120 ; 137 ; 149 ; 176 ; 191 ; 212) aufweist und

o) während der Reinigungsphase die Kontur der Innenwandung (34 ; 79 ; 122 ; 161) des Auslaufschlauches (20 ; 60 ; 105 ; 136 ; 146 ; 156 ; 175 ; 192 ; 211 ; 221) mit der äußeren Kontur (35 ; 80 ; 123 ; 162) des Ausstoßkolbens (16 ; 62 ; 108 ; 160) übereinstimmt.

2. Einrichtung nach Anspruch 1, dadurch gekennzeichnet, daß der Auslaufschlauch (20, 105) in der verlängerten Achse der Mischkammer (12 ; 107) angeordnet ist, und der Ausstoßkolben (16 ; 108) während der Reinigungsphase auch die Mischkammer (12 ; 107) ausfüllt.

3. Einrichtung nach Anspruch 1, dadurch gekennzeichnet, daß der Auslaufschlauch (60) unter einem Winkel zur Mischkammer (52) an deren Auslaßöffnung (57) anschließt, wobei der Mischkammer (52) ein eigener Ausstoßkolben (56) zugeordnet ist.

4. Einrichtung nach einem der Ansprüche 1-3, dadurch gekennzeichnet, daß die Auslenkungsvorrichtung (21 ; 136 ; 146 ; 156) aus einem querverschiebbaren Stößel (26 ; 133 ; 143 ; 153, 154) besteht.

5. Einrichtung nach einem der Ansprüche 1-3, dadurch gekennzeichnet, daß die Auslenkungsvorrichtung (106) aus einer Schwinge (109) besteht.

6. Einrichtung nach einem der Ansprüche 1-3, dadurch gekennzeichnet, daß die Auslenkungsvorrichtung (61) aus einer den Auslaufschlauch (60) nur teilweise umgebenden, abgestützten Druckkammer (64) mit Druckmittelanschlußstutzen (65, 66) besteht.

7. Einrichtung nach einem der Ansprüche 1-3, dadurch gekennzeichnet, daß die Auslaßöffnung (173 ; 195) der Mischkammer und die Auslaßöffnung (174 ; 196) des Auslaufschlauches (175, 192) während der Reinigungsphase gegenüber der Mischphase abweichende Positionen zueinander einnehmen.

8. Einrichtung nach einem der Ansprüche 1 bis 7, dadurch gekennzeichnet, daß der Auslaufschlauch (221) mindestens einen Zwischenabschnitt (222) höherer radialer Dehnfähigkeit aufweist.

**Claims**

1. Apparatus for the production of a flowable reaction mixture from at least two flowable components, which mixture forms a foam or solid material, consisting of :

a) supply vessels (1, 2 ; 41, 42) for the components, from which

b) feed pipes (3, 4 ; 43, 44) pass via

c) metering pumps (5, 6 ; 45, 46) to a

d) mixing head (7 ; 47 ; 102 ; 171 ; 193) which has

e) a mixing chamber (12 ; 52 ; 107) into which

f) injection openings (10, 11 ; 50, 51), which are connected to the feed pipes (3, 4 ; 43, 44), open and which has

g) an ejection piston (16 ; 62 ; 108 ; 160) and

h) an outlet opening (17 ; 57 ; 173) downstream of which an

i) outlet tube (20 ; 60 ; 105 ; 136 ; 146 ; 156 ; 175 ; 192 ; 211 ; 221) with

j) a means (21 ; 61 ; 106 ; 131 ; 141 ; 155 ; 171 ; 193 ; 194) for changing the throughflow cross-section is arranged,

k) the ejection piston (16 ; 62 ; 108 ; 160) being able to be pushed into the outlet tube (20 ; 60 ; 105 ; 136 : 146 ; 156 ; 175 ; 192 ; 211 ; 221) and filling the latter in the cleaning phase, characterised in that

l) the oulet tube (20 ; 60 ; 105 ; 136 ; 146 ; 156 ; 175 ; 192 ; 211 ; 221) is in the form of an elastic outlet tube ; and

m) the means (21 ; 61 ; 106 ; 131 ; 141 ; 155 ; 171 ; 193 ; 194) for changing the throughflow cross-section consists of a deflection device ;

n) the outlet tube (20 ; 60 ; 105 ; 136 ; 146 ; 156 ; 175 ; 192 ; 211 ; 221) has at least one reproducible deflection (25 ; 61 ; 120 ; 137 ; 149 ; 176 ; 191 ; 212) only during the mixing phase and

o) during the cleaning phase the contour of the inner wall (34 ; 79 ; 122 ; 161) of the outlet tube (20 ; 60 ; 105 ; 136 ; 146 ; 156 ; 175 ; 192 ; 211 ; 221) corresponds to the external contour (35 ; 80 ; 123 ; 162) of the ejection piston (16 ; 62 ; 108 ; 160).

2. Apparatus according to Claim 1, characterised in that the outlet tube (20 ; 105) is arranged on the prolonged axis of the mixing chamber (12 ; 107) and the ejection piston (16 ; 108) also fills the mixing chamber (12 ; 107) during the cleaning phase.

3. Apparatus according to Claim 1, characterised in that the outlet tube (60) joins the outlet opening (57) of the mixing chamber (52) at an angle thereto, the mixing chamber (52) having its own ejection piston (56).

4. Apparatus according to one of Claims 1-3, characterised in that the deflection device (21 ; 136 ; 146 ; 156) consists of a cross-sliding ram (26 ; 133 ; 143 ; 153 ; 154).

5. Apparatus according to one of Claims 1-3, characterised in that the deflection device (106) consists of a rocker arm (109).

6. Apparatus according to one of Claims 1-3, characterised in that the deflection device (61) consists of a supported pressure chamber (64) which has connecting pipes (65, 66) for the pressure medium and only partly surrounds the outlet tube (60).

7. Apparatus according to one of Claims 1-3, characterised in that the outlet opening (173 ; 195) of the mixing chamber and the outlet opening (174 ; 196) of the outlet tube (175, 192) occupy different positions in relation to each other during the cleaning phase compared with the mixing phase.

8. Apparatus according to one of Claims 1 to 7, characterised in that the outlet tube (221) has at least one intermediate section (222) of greater radial expandability.

**Revendications**

1. Dispositif pour produire d'au moins deux composants fluides un mélange réactionnel fluide formant une matière alvéolaire (mousse) ou une matière compacte ou massive, comprenant :
   a) des réservoirs d'alimentation (1, 2 ; 41, 42) pour les composants, d'où
   b) des conduites d'alimentation (3, 4 ; 43, 44) mènent à travers
   c) des pompes de dosage (5, 6 ; 45, 46) jusqu'à
   d) une tête de mélange (7 ; 47 ; 102 ; 171 ; 193) qui présente
   e) une chambre de mélange (12 ; 52 ; 107) dans laquelle débouchent
   f) des orifices d'injection (10, 11 ; 50, 51) communiquant avec les conduites d'alimentation (3, 4 ; 43, 44),
   g) un piston éjecteur (16 ; 62 ; 108 ; 160), de même que
   h) un orifice de sortie (17 ; 57 ; 173) qui est suivi
   i) d'un tube de sortie (20 ; 60 ; 105 ; 136 ; 146 ; 156 ; 175 ; 192 ; 211 ; 221) avec
   j) un moyen (21 ; 61 ; 106 ; 131 ; 141 ; 155 ; 171 ; 193 ; 194) pour changer la section d'écoulement, dispositif où
   k) le piston éjecteur (16 ; 62 ; 108 ; 160), dans la phase de nettoyage, peut être introduit dans le tube de sortie (20 ; 60 ; 105 ; 136 ; 146 ; 156 ; 175 ; 192 ; 211 ; 221) en remplissant celui-ci, caractérisé en ce que
   l) le tube de sortie (20 ; 60 ; 105 ; 136 ; 146 ; 156 ; 175 ; 192 ; 211 ; 221) est un tuyau de sortie souple et élastique ;
   m) le moyen (21 ; 61 ; 106 ; 131 ; 141 ; 155 ; 171 ; 193 ; 194) pour changer la section d'écoulement est un dispositif de déviation ;
   n) le tuyau de sortie (20 ; 60 ; 105 ; 136 ; 146 ; 156 ; 175 ; 192 ; 211 ; 221) présente au moins une déviation reproductible (25 ; 61 ; 120 ; 137 ; 149 ; 176 ; 191 ; 212) pendant la seule phase de mélange et,
   o) pendant la phase de nettoyage, le contour de la paroi interne (34 ; 79 ; 122 ; 161) du tuyau de sortie (20 ; 60 ; 105 ; 136 ; 146 ; 156 ; 175 ; 192 ; 211 ; 221) correspond au contour extérieur (35 ; 80 ; 123 ; 162) du piston éjecteur (16 ; 62 ; 108 ; 160).

2. Dispositif selon la revendication 1, caractérisé en ce que le tuyau de sortie (20 ; 105) est disposé sur l'axe de la chambre de mélange (12 ; 107) dans le prolongement de celle-ci et le piston éjecteur (16 ; 108) remplit également la chambre de mélange (12 ; 107) pendant la phase de nettoyage.

3. Dispositif selon la revendication 1, caractérisé en ce que le tuyau de sortie (60) se raccorde à l'orifice de sortie (57) de la chambre de mélange (52) en faisant un angle avec cette chambre, à laquelle est conjugué un piston éjecteur (56) qui lui est propre.

4. Dispositif selon une des revendications 1 à 3, caractérisé en ce que le dispositif de déviation (21 ; 136 ; 146 ; 156) est un poussoir (26 ; 133 ; 143 ; 153, 154) déplaçable transversalement.

5. Dispositif selon une des revendications 1 à 3, caractérisé en ce que le dispositif de déviation (106) est un élément oscillant (109).

6. Dispositif selon une des revendications 1 à 3, caractérisé en ce que le dispositif de déviation (61) est une chambre de pression (64) pourvue de tubulures de raccordement (65, 66) pour un fluide de pression, qui est soutenue et qui entoure le tuyau de sortie (60) en partie seulement.

7. Dispositif selon une des revendications 1 à 3, caractérisé en ce que l'orifice de sortie (173 ; 195) de la chambre de mélange et l'orifice de sortie (174 ; 196) du tuyau de sortie (175, 192) occupent des positions relatives différentes pendant la phase de nettoyage et pendant la phase de mélange.

8. Dispositif selon une des revendications 1 à 7, caractérisé en ce que le tuyau de sortie (221) comporte au moins un tronçon intermédiaire (222) de plus grande extensibilité radiale.

FIG.1

FIG.2

FIG. 3

FIG. 4

FIG. 5

FIG. 6

FIG. 7

FIG. 8

FIG. 9

FIG.10

FIG.11

FIG.12

FIG.13

137
135
136
134 133 132 131

FIG.14

146
149
145
148
144 147 143 142 141

FIG.15

157 158 155
N
159
N
153 154
151 152
156

FIG.16

151 162 156 152 155
N
153 154
M
160 161
M

FIG. 17

FIG.18

FIG. 19

FIG. 20

FIG.21

FIG. 22